# DEMANDE DE BREVET EUROPEEN

(11) **EP 1 983 309 A1**
(43) Date de publication de la demande: **22.10.2008**
(21) Numéro de dépôt: 08154212.8
(22) Date de dépôt: 08.04.2008
(51) Int. Cl.: G01D 11/30, G01D 11/24, E02F 9/00

(54) **Système d'articulation instrumenté.**

(30) Priorité: 19.04.2007 FR 0754582
(71) Demandeur: Aktiebolaget SKF, 415 50 Göteborg (SE)
(72) Inventeur: Niarfeix, François, 37000, TOURS (FR); Locher, Benoît, 37550, SAINT-AVERTIN (FR)
(74) Mandataire: Casalonga, Axel

(57) **Abrégé**

Le système d'articulation instrumenté comprend un axe d'articulation 30 apte à relier une première partie et une seconde partie mobile pivotante par rapport à la première partie, et un ensemble de détection 40 de paramètres de rotation de la seconde partie monté à l'intérieur d'un logement 46 de l'axe d'articulation 30, ledit ensemble de détection 40 comprenant au moins un roulement 56 muni d'une bague intérieure et d'une bague extérieure, et un fourreau 52 lié angulairement à la bague extérieure. L'ensemble de détection 40 est pourvu en outre d'un support 48 lié angulairement à l'axe d'articulation 30 et sur lequel est monté la bague intérieure du roulement, et d'un moyen de retenue axiale 100 du support à l'intérieur du logement 46.

## Description

La présente invention concerne le domaine des systèmes d'articulation instrumentés utilisés en particulier sur les engins pour l'exécution de terrassements.

Plus précisément, la présente invention concerne un système d'articulation instrumenté destiné à relier une première partie et une seconde partie mobile pivotante par rapport à la première partie, et apte à mesurer le déplacement angulaire relative de ces deux parties.

De tels systèmes d'articulation sont classiquement utilisés pour des bras articulés d'engins de terrassements afin de piloter le déplacement angulaire de divers éléments articulés.

Généralement, ces systèmes comprennent un boîtier de détection qui est rapporté à une extrémité axiale d'un arbre d'articulation reliant deux parties dont l'une est mobile pivotante par rapport à l'autre.

Or, de tels engins sont généralement soumis à une pollution intense par des projections diverses, notamment de terre, de boue ou encore de poussière. En outre, le nettoyage de ces engins est réalisé avec des jets haute pression qui sont susceptibles de détériorer le boîtier de détection.

Par ailleurs, de par sa disposition sur l'arbre d'articulation, le boîtier peut également être soumis à des chocs lors de déplacements de l'engin sur lequel il est monté.

Dès lors, on conçoit aisément qu'il existe un risque important de détérioration du boîtier de détection, ce qui diminue sensiblement sa durée de vie ainsi que la fiabilité de l'engin pour l'exécution de terrassements.

De manière à remédier à ces inconvénients, le document EP-A-1 092 809 décrit un système d'articulation instrumenté pourvu d'un arbre principal comprenant un évidement à l'intérieur duquel est monté par emmanchement un boîtier comprenant des moyens de détection de paramètres de rotation. Le système d'articulation comprend également un arbre secondaire et un palier à roulement monté entre ledit arbre et le boîtier pour la détection des paramètres de rotation.

Ce système d'articulation a notamment pour inconvénient majeur de ne pas permettre une extraction aisée du boîtier en vue par exemple d'une opération de réparation d'un des moyens prévus pour la détection. En effet, pour obtenir après montage le déplacement du boîtier, il est nécessaire d'exercer un effort axial de traction relativement important sur l'arbre secondaire, ce qui soumet le palier à roulement à des contraintes excessives et peut provoquer une détérioration de celui-ci.

La présente invention a donc pour but de remédier à cet inconvénient.

Plus particulièrement, la présente invention vise à prévoir un système d'articulation instrumenté qui soit particulièrement compact, bien protégé, facile à monter et à démonter, et économique.

La présente invention a également pour but de prévoir un système présentant une bonne sûreté de fonctionnement.

Dans un mode de réalisation, le système d'articulation instrumenté comprend un axe d'articulation apte à relier une première partie et une seconde partie mobile pivotante par rapport à la première partie, et un ensemble de détection de paramètres de rotation de la seconde partie monté à l'intérieur d'un logement de l'axe d'articulation. Ledit ensemble de détection comprend au moins un roulement muni d'une bague intérieure et d'une bague extérieure, et un fourreau lié angulairement à la bague extérieure. L'ensemble de détection est pourvu en outre un support lié angulairement à l'axe d'articulation et sur lequel est monté la bague intérieure du roulement, et d'un moyen de retenue axiale du support à l'intérieur du logement.

Avec un tel système, il devient dès lors possible d'obtenir un démontage particulièrement aisé du fourreau et du support en limitant le risque d'endommagement du ou des roulements.

En effet, la disposition d'un moyen de retenue axiale permet d'éviter de prévoir un montage serré du support à l'intérieur du logement. Dès lors, après avoir retiré le moyen de retenue axiale, le support et le fourreau peuvent être facilement extraits du logement. On limite ainsi le risque de détérioration du ou des paliers à roulement lors du démontage du système.

En d'autres termes, avec le moyen de retenue axiale en appui contre le support sur lequel est monté la bague intérieure du roulement et le montage de la bague extérieure dudit roulement dans le fourreau qui est lui-même monté sans contact dans le logement de l'axe d'articulation, on évite de solliciter le roulement de manière excessive lors d'un démontage du système. Ceci est notamment rendu possible par le montage du roulement sans contact direct avec l'axe d'articulation.

Dans un mode de réalisation, le moyen de retenue axiale comprend un manchon pourvu d'une portion de fixation sur l'axe d'articulation et d'une surface d'appui pour le support.

Avantageusement, le support comprend une portion axiale tubulaire extérieure disposée à l'intérieur d'un alésage cylindrique du logement.

Dans un mode de réalisation, la portion axiale tubulaire extérieure entoure radialement au moins en partie le fourreau en laissant subsister un jeu radial entre ledit fourreau et le support.

Dans un mode de réalisation, le support comprend une portion de coincement tronconique apte à coopérer avec une portion de forme complémentaire d'un alésage du logement de l'axe d'articulation.

De préférence, le fourreau est entièrement logé à l'intérieur du logement de l'axe d'articulation. Le fourreau peut comporter un alésage étagé pour le montage d'éléments de l'ensemble de détection.

Dans un mode de réalisation, l'ensemble de détection comprend un connecteur s'étendant axialement à l'intérieur du fourreau. Le connecteur est entièrement logé à l'intérieur du fourreau.

De préférence, l'ensemble de détection comprend un élément codeur monté à une extrémité axiale du support et un élément capteur situé axialement en regard dudit élément codeur.

Dans un mode de réalisation, l'élément capteur est monté contre une carte de circuit imprimé en appui contre une surface de butée du fourreau.

L'invention a également pour objet un engin de terrassement comprenant une première partie, une seconde partie mobile formant bras pivotant par rapport à la première partie, au moins un axe d'articulation apte à relier les parties entre elles, et un ensemble de détection de paramètres de rotation de la seconde partie monté à l'intérieur d'un logement de l'axe d'articulation. Ledit ensemble de détection comprend au moins un roulement muni d'une bague intérieure et d'une bague extérieure, et un fourreau lié angulairement à la bague extérieure. L'ensemble de détection est pourvu en outre d'un support lié angulairement à l'axe d'articulation et sur lequel est monté la bague intérieure du roulement, et d'un moyen de retenue axiale du support à l'intérieur du logement.

En d'autres termes, l'ensemble de détection comprend un support pour le montage de la bague intérieure du roulement et un moyen de blocage en position du support à l'intérieur du logement.

La présente invention sera mieux comprise à la lecture de la description détaillée d'un mode de réalisation pris à titre d'exemple nullement limitatif et illustré par les dessins annexés, sur lesquels :
- la figure 1 est une vue en coupe axiale d'un système d'articulation instrumenté selon l'invention,
- la figure 2 est une vue de détail de la figure 1, et
- la figure 3 est une vue en perspective d'un module du système d'articulation de la figure 1.

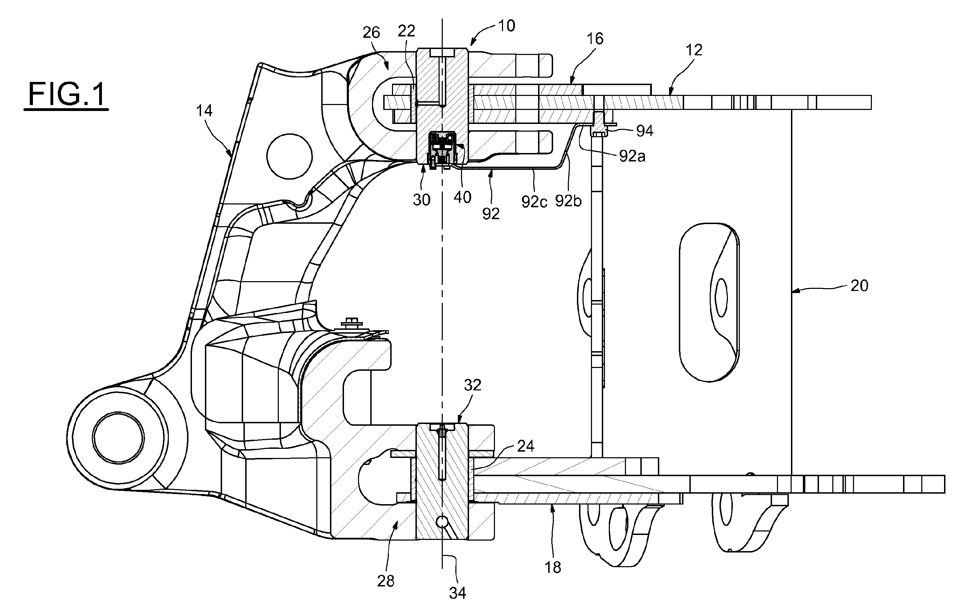

Sur la figure 1, on a représenté un système d'articulation instrumenté, désigné par la référence numérique générale 10, destiné à relier une première partie, ici fixe 12 et solidaire d'un châssis (non représenté) d'un engin pour l'exécution de terrassements et une seconde partie 14 formant bras articulé mobile par rapport à la première partie 12. L'engin peut par exemple être une pelleteuse.

La première partie 12 fixe comprend notamment deux éléments de liaison 16, 18 parallèles et reliés entre eux par une entretoise 20 s'étendant transversalement.

Pour permettre un montage à rotation du système d'articulation 10 par rapport à la première partie 12 fixe, celle-ci comprend également des paliers lisses 22, 24 montés à proximité d'extrémités libres des éléments de liaison 16 et 18, respectivement.

La seconde partie 14 mobile présente, en section droite, une forme générale en U. Chaque extrémité du U comprend une chape 26, 28 entourant respectivement les éléments de liaison 16 et 18.

Afin d'obtenir une articulation de la seconde partie 14 mobile par rapport à la première partie 12 fixe, le système 10 comporte un premier axe d'articulation 30 monté sur la chape 26, et un second axe d'articulation 32 disposé au niveau de la chape 28. Les axes d'articulations 30, 32 comprennent un axe géométrique commun 34.

Plus précisément, le premier axe d'articulation 30 est monté à rotation par rapport à la première partie 12 fixe autour de l'axe 34, par l'intermédiaire du palier 22. Il est fixé rigidement sur la seconde partie mobile 14 au niveau de la chape 26. Le second axe d'articulation 32 est monté à rotation par rapport à la première partie fixe 12 autour de l'axe 34, par l'intermédiaire du palier 24.

Pour la détection du déplacement angulaire de la seconde partie 14 mobile relativement à la première partie 12 fixe, le système 10 comprend encore un ensemble 40 de détection de paramètres de rotation monté à l'intérieur de l'axe d'articulation 30.

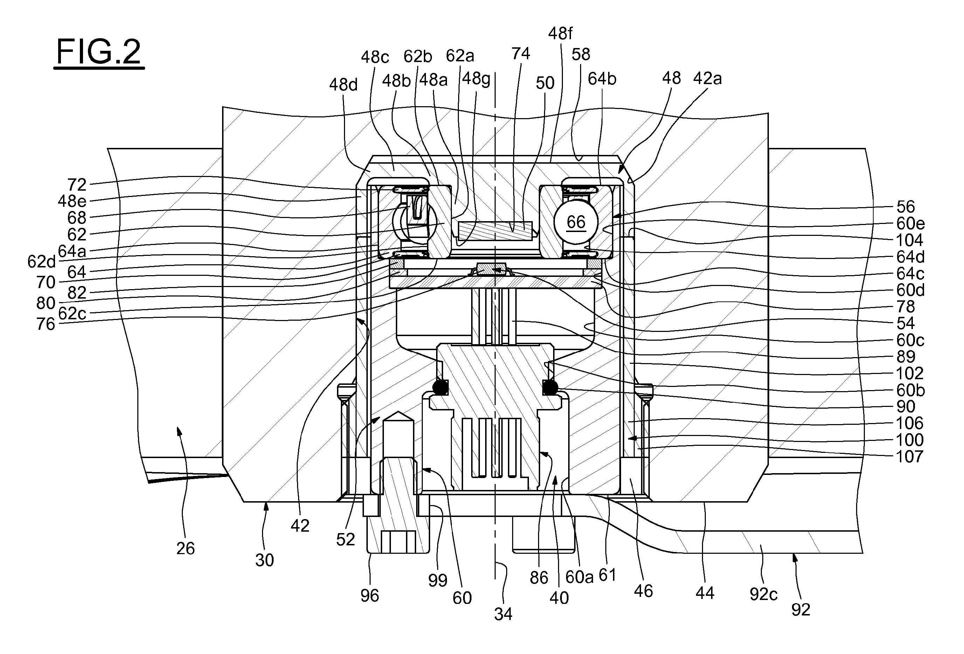

Comme illustré plus visiblement sur la figure 2, l'ensemble 40 de détection est monté à l'intérieur d'un alésage 42 cylindrique centré sur l'axe 34 et ménagé à partir d'une surface d'extrémité 44 radiale de l'axe d'articulation 30. L'alésage 42 délimite un logement 46 à l'intérieur duquel est entièrement monté l'ensemble 40 de détection.

L'ensemble 40 de détection comprend principalement un support 48 comprenant un élément codeur 50, un fourreau 52 supportant un élément capteur 54 axialement en regard de l'élément codeur 50, et un palier à roulement 56 disposé entre le support et le fourreau.

Le support 48 comprend une portion axiale intérieure 48a qui est prolongée vers l'extérieur, à partir d'une extrémité axiale, par une première portion radiale 48b, elle-même prolongée vers l'extérieur par une seconde portion radiale 48c de dimension axiale réduite. La portion radiale 48c est prolongée à partir d'un bord de grand diamètre par une portion tronconique 48d s'évasant vers l'extérieur, elle-même prolongée axialement par une portion axiale tubulaire extérieure 48e qui entoure radialement la première portion 48a. Le support 48 est délimité axialement par des surfaces frontales radiales d'extrémité 48f et 48g.

Le support 48 est monté axialement à l'intérieur de l'alésage 42 de l'axe d'articulation 30. Plus précisément, la surface frontale radiale d'extrémité 48f est à proximité d'une paroi de fond 58 de l'alésage 42. La portion axiale tubulaire extérieure 48e du support 48 vient se loger avec un faible jeu radial à l'intérieur de l'alésage 42 de l'axe d'articulation 30. Comme cela sera décrit plus en détail par la suite, la portion tronconique 48d forme quant à elle une portion de coincement et de centrage dudit support à l'intérieur de l'alésage 42.

Le fourreau 52, centré sur l'axe 34, présente une forme générale tubulaire. Le fourreau 52 est entièrement situé axialement à l'intérieur du logement 46, et reste radialement à distance de l'alésage 42 cylindrique. En d'autres termes, il existe un espace radial entre la surface extérieure du fourreau 52 et l'alésage 42. Le fourreau 52 comprend un alésage 60 étagé ménagé à partir d'une surface d'extrémité 61 radiale qui est décalée axialement par rapport à la surface d'extrémité 44, en direction de la paroi de fond 58. L'alésage 60 s'étend sur toute la longueur du fourreau 52. Ledit fourreau présente une forme générale creuse.

L'alésage 60 comprend un premier étage 60a s'étendant à partir de la surface d'extrémité 51 et prolongé à une extrémité axiale par un second étage 60b de diamètre réduit, lui-même prolongé à une extrémité axiale située du côté opposé au premier étage 60a, par un troisième étage 60c de diamètre supérieur au diamètre du premier étage 60a. Le troisième étage 60c est prolongé à une extrémité axiale par un quatrième étage 60d, lui-même prolongé axialement du côté opposé au troisième étage 60c, par un cinquième étage 60e de plus grand diamètre. Le cinquième étage de l'alésage 60e s'étend axialement en partie dans l'espace annulaire délimité entre les première et seconde portions axiales intérieure 48a et extérieure 48e du support 48, jusqu'au voisinage de la portion radiale 48c. En d'autres termes, la portion extérieure 48e entoure radialement au moins en partie le fourreau 52 en laissant subsister un jeu radial entre ledit fourreau et le support.

Le palier à roulement 56, à gorge profonde et à faces latérales radiales, est un roulement standard qui présente un faible coût de fabrication. Il comprend une bague intérieure 62, une bague extérieure 64, entre lesquelles sont logées une rangée d'éléments roulants 66 réalisés ici sous forme de billes, une cage de maintien 68 de l'espace circonférentiel des éléments roulants, et deux joints d'étanchéité 70 et 72.

La bague intérieure 62 est de type massif. On entend par « bague de type massif », une bague dont la forme est obtenue par usinage avec enlèvement de copeaux (tournage, rectification) à partir de tubes, de barres, d'ébauches forgées et/ou roulées.

La bague intérieure 62 comprend un alésage 62a de forme cylindrique emmanché sur la surface extérieure de la portion axiale 48a du support 48, et délimité par des surfaces latérales radiales 62b et 62c opposées. La surface latérale radiale 62b est montée contre la portion radiale 48b qui forme ainsi une surface de butée axiale pour le roulement 56. La bague intérieure 62 comprend encore une surface cylindrique extérieure 62d à partir de laquelle est formée une gorge circulaire toroïdale (non référencée) présentant en section droite un profil interne concave apte à former un chemin de roulement pour les éléments roulants 66, ladite gorge étant orientée vers l'extérieur.

La bague extérieure 64, également de type massif, comprend une surface cylindrique extérieure 64a montée par emmanchement à l'intérieur du cinquième étage 60e de l'alésage 60 du fourreau 52, et délimitée par des surfaces latérales radiales 64b et 64c opposées. La surface latérale radiale 64c vient en appui contre une surface radiale de l'alésage 60 ménagée entre le cinquième étage 60e et le quatrième étage 60d dudit alésage. Cette surface forme ainsi surface de butée axiale pour le roulement 56.

La bague extérieure 64 comporte encore un alésage 64d de forme cylindrique à partir duquel est formée une gorge circulaire toroïdale (non référencée) présentant en section droite un profil interne concave apte à former un chemin de roulement pour les éléments roulants 66, ladite gorge étant orientée vers l'intérieur.

La bague extérieure 64 comprend également, au niveau de l'alésage 64d et à proximité des surfaces radiales 64b et 64c, deux rainures (non référencées) annulaires symétriques entre elles par rapport à un plan radial passant par le centre des éléments roulants 66. A l'intérieur desdites rainures sont montés les joints 70 et 72 d'étanchéité aptes à empêcher l'intrusion d'éléments extérieurs indésirables à l'intérieur du palier à roulement 56.

Comme indiqué précédemment, pour permettre une détection du déplacement angulaire de la seconde partie 14 mobile relativement à la première partie 12, l'ensemble 40 de détection comporte l'élément codeur 50 et l'élément capteur 54 situé sensiblement axialement en regard dudit élément codeur.

L'élément codeur 50 est monté dans un logement 74 ménagé à partir de la surface radiale d'extrémité 48g. Ainsi, l'élément codeur 50 est monté à une extrémité axiale du support 48, du côté opposé à la paroi de fond 58 de l'axe d'articulation 30. L'élément codeur 50 est ici centré sur l'axe 34, en étant en légère saillie axiale par rapport à la surface radiale d'extrémité 48g. L'élément codeur 50 peut par exemple être réalisé sous la forme d'un aimant, de forme générale cylindrique. I1 est fixé à l'intérieur du logement 74, par tout moyen approprié.

L'élément capteur 54 comprend, quant à lui, une partie active formant capteur 76 et une carte 78 de circuit imprimé rigide formant plaque de support du capteur 76 qui est montée en appui contre une surface radiale délimitée par le troisième étage 60c et le quatrième étage 60d de l'alésage 60 du fourreau 52.

Le capteur 76 est monté axialement en regard de l'élément codeur 50 avec un faible entrefer axial. Le capteur 76 peut être du type magnéto sensible, et comporter par exemple une magnétorésistance ou un faisceau de sondes à effet Hall. Le capteur 76 est disposé à faible distance axiale de l'élément codeur 50, ce qui favorise la compacité de l'ensemble 40.

La carte 78 de circuit imprimé est apte à traiter des données ou signaux transmis par le capteur 76 représentatifs de la position angulaire de la seconde partie 14 mobile par rapport à celle de la première partie 12 fixe. A cet égard, la carte 78 peut comprendre un circuit de prétraitement des signaux émis.

Pour permettre le montage de la carte 78 de circuit imprimé à l'intérieur de l'alésage 60, le système 10 comprend également deux rondelles d'appui 80 et 82 montées axialement en appui l'une contre l'autre et en contact avec le quatrième étage 60d de l'alésage 60.

La rondelle d'appui 80 est montée axialement contre une surface de la carte 78 de circuit imprimé. La rondelle d'appui 80 est réalisée dans un matériau relativement rigide, par exemple en acier. La rondelle d'appui 82 est montée, quant à elle, axialement entre la rondelle d'appui 88 et la surface radiale 64c de la bague extérieure 64 du roulement 56. La rondelle 82 est réalisée en matière élastique souple, par exemple en élastomère.

Ainsi, la rondelle d'appui 82 précontraint axialement la rondelle d'appui 80 contre la carte 78 de circuit imprimé, ce qui permet notamment d'absorber d'éventuelles variations dimensionnelles de celle-ci et de garantir en permanence un positionnement axial correct de la carte 78 et l'absence de jeu axial. En variante, il pourrait être également envisageable de prévoir à cet effet une rondelle ondulée axialement élastique.

Pour permettre un pilotage de la seconde partie mobile 14 en fonction des signaux émis par le capteur 54, le système 10 comprend encore une unité de contrôle (non représentée) pouvant comporter un élément de filtrage, un convertisseur analogique/numérique pour convertir les signaux émis par ledit capteur.

Afin de connecter l'unité de contrôle à la carte 78 de circuit imprimé, l'ensemble 40 de détection comprend encore un connecteur 86 monté à l'intérieur du second étage 60b de l'alésage 60 du fourreau 52. Le connecteur 86 s'étend axialement vers l'extérieur, en étant toutefois entièrement logé à l'intérieur de l'alésage 60.

Plus précisément, le connecteur 86 est entièrement logé à l'intérieur du fourreau 52, une extrémité axiale dudit connecteur étant légèrement en retrait par rapport à la surface d'extrémité 61. Compte tenu de la forme creuse du fourreau 52, le connecteur 86 peut être aisément connecté électriquement avec l'extérieur du système sans qu'il soit nécessaire de prévoir dans ledit fourreau un cheminement spécifique pour un câble électrique et/ou l'utilisation de pièces additionnelles de fixation. On simplifie ainsi la conception du fourreau 52, et plus généralement du système 10.

Le connecteur 86 est relié à la carte 78 de circuit imprimé, par l'intermédiaire de connexions électriques 89 qui s'étendent axialement entre ces deux éléments à l'intérieur du troisième étage 60c de l'alésage 60. Un joint d'étanchéité 90 est encore prévu entre le second étage 60b de l'alésage 60 et le connecteur 86.

Afin de permettre la liaison angulaire du fourreau 52 avec la première partie 12 fixe, le système 10 comprend une potence 92. Celle-ci est pourvue d'une première portion radiale 92a (figure 1) fixée contre l'élément de liaison 16 de la première partie 12, par l'intermédiaire d'une vis de fixation 94. La portion radiale 92a est prolongée par une portion sensiblement axiale 92b, elle-même prolongée à une extrémité axiale par une seconde portion radiale 92c s'étendant axialement à distance de la chape 26 jusqu'au voisinage de la surface d'extrémité 44 radiale de l'axe d'articulation 30. La portion radiale 92c vient en appui contre la surface radiale d'extrémité 61 du fourreau 52. La fixation du fourreau 52 sur la potence 92 est réalisée par l'intermédiaire d'organes de fixation 96, tels que des vis, logés à l'intérieur de trous 98 ménagés sur la surface d'extrémité 44. Les trous 98 sont ici au nombre de trois. Pour permettre un accès facilité au connecteur 86 en vue d'un branchement électrique, la portion radiale 92c de la potence comprend, au voisinage de son extrémité libre, une ouverture 99.

Pour assurer le maintien du contact axial entre l'axe 30 d'articulation et le support 48, le système 10 comprend également un manchon 100 en appui contre ledit support et entourant radialement au moins en partie le fourreau 52. Le manchon 100 comprend une portion axiale 102 tubulaire montée à l'intérieur de l'alésage 42 de l'axe d'articulation 30, en contact contre celui-ci, l'extrémité libre de ladite portion formant surface d'appui ou de butée 104 contre la portion axiale 48e du support 48. La portion axiale 102 entoure radialement le fourreau 52 en restant à distance de celui-ci.

Le manchon 100 comprend également une collerette radiale 106 située axialement à l'opposé de la surface de butée 104. La collerette 106 comprend sur sa surface extérieure un filetage 107 pour obtenir la fixation par vissage du manchon 100 à l'intérieur de l'alésage 42. Un filetage correspondant (non référencé) est ménagé sur une partie dudit alésage 42. Bien entendu, on pourrait en remplacement du filetage prévoir un autre moyen de fixation approprié pour la retenue du manchon 100 sur l'axe d'articulation.

Lors du vissage du manchon 100 à l'intérieur de l'alésage 42, la surface de butée 104 vient dans un premier temps en appui contre la portion axiale 48e du support 48. Ensuite, le manchon 100 exerce sur le support 48 un effort axial dirigé vers la paroi de fond 58 qui tend à le pousser au fond du logement 43. Le manchon 100 permet de maintenir une pression de contact entre la portion tronconique 48d du support 48 et une partie tronconique 42a du logement 46 de l'axe d'articulation 30, ladite partie tronconique 42a reliant la portion cylindrique de l'alésage 42 et la portion de fond 58 du logement 46. Le manchon 100 constitue en outre un moyen de retenue axiale du support 48 à l'intérieur du logement 43.

En d'autres termes, le vissage du manchon 100 provoque le déplacement axial du support 48 en direction de la paroi de fond 58 jusqu'à obtenir la fixation du support à l'intérieur de l'alésage 42, par coincement de la portion tronconique 48d venant en appui contre une surface de la partie tronconique 42a en concordance de forme avec ledit axe. La surface tronconique 48d assure également un centrage parfait entre le support 48 et l'axe d'articulation 30.

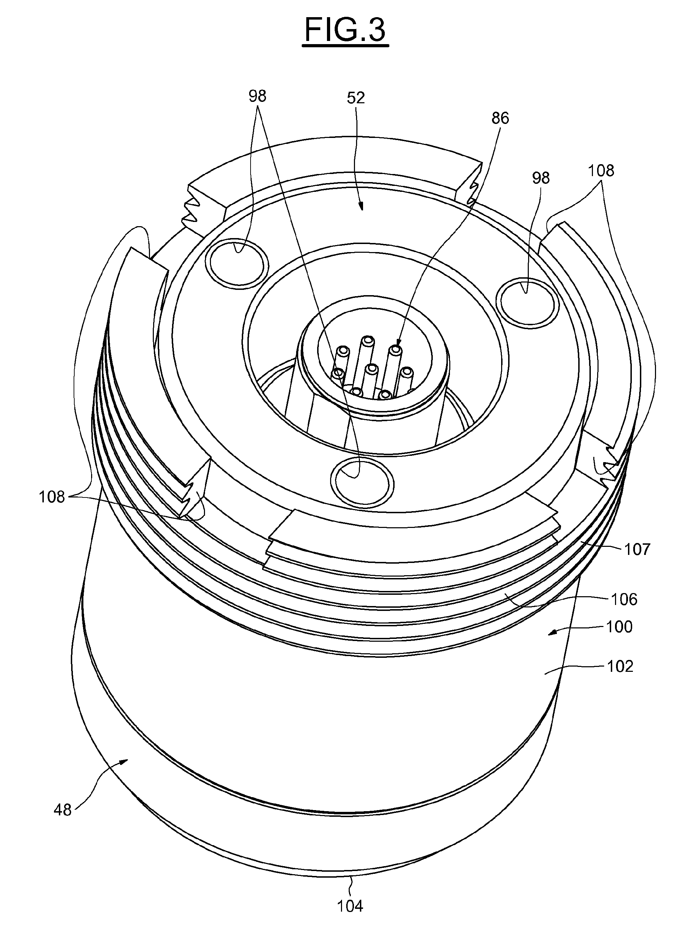

Pour réaliser le vissage du manchon 100, il est ménagé sur la collerette 106 des encoches 108 axiales visibles sur la figure 3 pour permettre le passage d'une clé crénelée (non représentée).

En fonctionnement, lorsque la seconde partie 14 pivote angulairement par rapport à la première partie 12, l'axe 30 d'articulation est également entraîné en rotation autour de l'axe 34. Ainsi, le support 48 qui est lié angulairement ou solidaire dudit axe est entraîné en rotation, le fourreau 52 restant quant à lui fixe. Le déplacement angulaire relatif est détecté par l'intermédiaire de l'élément codeur 50 et de l'élément capteur 54.

On obtient ainsi un système comprenant un axe d'articulation et un ensemble intégré de détection de paramètres de rotation qui est entièrement logé à l'intérieur du fourreau qui est lui-même disposé à l'intérieur du logement de l'axe d'articulation. L'ensemble de détection, et notamment le connecteur, est ainsi efficacement protégé des chocs et des pollutions diverses en provenance du milieu extérieur. Cette disposition facilite également le montage de l'axe d'articulation qui peut être monté par simple poussée axiale.

Par ailleurs, l'utilisation d'un manchon de serrage pour obtenir la fixation du support à l'intérieur de l'alésage de l'axe d'articulation permet de faciliter le montage mais également le démontage du système. En effet, une fois le manchon enlevé, il suffit de tirer sur le fourreau pour extraire l'ensemble de détection du logement de l'axe principal. Le fourreau, le support, le manchon de serrage, le roulement, le codeur, le capteur, la carte électronique et le connecteur se présentent ainsi sous la forme d'un module compact pouvant être monté facilement dans le logement de l'axe prévu à cet effet ou démonté facilement dudit logement si nécessaire.

## Revendications

1. Système d'articulation instrumenté comprenant un axe d'articulation (30) apte à relier une première partie (12) et une seconde partie mobile (14) pivotante par rapport à la première partie, et un ensemble de détection (40) de paramètres de rotation de la seconde partie monté à l'intérieur d'un logement (46) de l'axe d'articulation (30), ledit ensemble de détection (40) comprenant au moins un roulement (56) muni d'une bague intérieure et d'une bague extérieure, et un fourreau (52) lié angulairement à la bague extérieure, **caractérisé en ce que** l'ensemble de détection (40) est pourvu en outre d'un support (48) lié angulairement à l'axe d'articulation (30) et sur lequel est monté la bague intérieure du roulement, et d'un moyen de retenue axiale (100) du support à l'intérieur du logement (46).

2. Système selon la revendication 1, dans lequel le moyen de retenue axiale (100) comprend un manchon pourvu d'une portion de fixation (106) sur l'axe d'articulation (30) et d'une surface d'appui (104) pour le support (48).

3. Système selon la revendication 1 ou 2, dans lequel le support (48) comprend une portion axiale tubulaire extérieure (48e) disposée à l'intérieur d'un alésage cylindrique (42) du logement (46).

4. Système selon la revendication 3, dans lequel la portion axiale tubulaire extérieure (48e) entoure radialement au moins en partie le fourreau (52) en laissant subsister un jeu radial entre ledit fourreau et le support.

5. Système selon l'une quelconque des revendications précédentes, dans lequel le support (48) comprend une portion de coincement (48d) tronconique apte à coopérer avec une portion de forme complémentaire (42a) d'un alésage (42) du logement (46) de l'axe d'articulation (30).

6. Système selon l'une quelconque des revendications précédentes, dans lequel le fourreau (52) est entièrement logé à l'intérieur du logement (46) de l'axe d'articulation (30).

7. Système selon l'une quelconque des revendications précédentes, dans lequel le fourreau (52) comporte un alésage (60) étage pour le montage d'éléments de l'ensemble de détection (40).

8. Système selon la revendication 7, dans lequel l'ensemble de détection comprend un connecteur (86) s'étendant axialement à l'intérieur du fourreau (52).

9. Système selon l'une quelconque des revendications précédentes, dans lequel l'ensemble de détection (40) comprend un élément codeur (50) monté à une extrémité axiale du support et un élément capteur (54) situé axialement en regard dudit élément codeur.

10. Système selon la revendication 9, dans lequel l'élément capteur (54) est monté contre une carte (78) de circuit imprimé en appui contre une surface de butée du fourreau (52).

11. Engin de terrassement comprenant un système d'articulation instrumenté selon l'une quelconque des revendications précédentes.
